# EUROPÄISCHE PATENTSCHRIFT

(11) **EP 1 951 024 B1**
(45) Veröffentlichungstag und Bekanntmachung des Hinweises auf die Patenterteilung: **25.05.2011**
(21) Anmeldenummer: 06805490.7
(22) Anmeldetag: 26.10.2006
(51) Int. Cl.: A01B 45/02, A01B 61/00

(54) **BODENBEARBEITUNGSGERÄT MIT KURBELSCHUTZ**
SOIL-WORKING IMPLEMENT WITH CRANK PROTECTION
APPAREIL DE TRAITEMENT DU SOL DOTE D'UNE PROTECTION DE MANIVELLE

(30) Priorität: 21.11.2005 DE 102005055289
(43) Veröffentlichungstag der Anmeldung: 06.08.2008
(73) Patentinhaber: Wiedenmann GmbH, 89192 Rammingen (DE)
(72) Erfinder: WIEDENMANN, Georg, 89192 Rammingen (DE)
(74) Vertreter: Kastel, Stefan
(86) Internationale Anmeldenummer: PCT/DE2006/001893
(87) Internationale Veröffentlichungsnummer: WO 2007/059724

(56) Entgegenhaltungen:
- EP-A1- 1 208 730
- DE-A1- 4 323 315
- DE-A1- 4 333 310
- DE-A1-102004 018 101
- GB-A- 2 333 219

## Beschreibung

Die Erfindung betrifft ein Bodenbearbeitungsgerät für die Tiefenlockerung von Böden mit den Merkmalen des Oberbegriffes des beigefügten Anspruches 1.

Solche Bodenbearbeitungsgeräte sind in verschiedenen Versionen auf dem Markt und aus einer Vielzahl von Patentdokumenten, wie beispielsweise der DE 196 55 123 C2, der WO 98/05191, der EP 1 040 741 A2, der EP 0 853 869 B1, der JP-A-55-89538, der EP 0 037 595 A1 sowie insbesondere der EP 1 208 730 A1 bekannt.

Das Grundprinzip von Tiefenlüftern als Beispiel für solche Geräte ist beispielsweise in der EP 0 853 869 B1 beschrieben. Demnach sind diese Bodenbearbeitungsgeräte beispielsweise an ein Zugfahrzeug anlenkbar und über den Boden verfahrbar. Beispielsweise kann das Gerät an einen anheb- und absenkbaren Dreipunkt-Anschluss eines Traktors angelenkt werden oder als Anhänger an ein Zugfahrzeug angelenkt werden. Die Bodenbearbeitungsgeräte haben in der Regel einen Geräterahmen (auch Gerätechassis genannt), welcher meist mit Rädern, Rollen oder Walzen oder dergleichen versehen auf dem Boden abrollen kann. Quer zur Bewegungsrichtung (Fahrtrichtung) weisen die hier in Rede stehenden Bodenbearbeitungsgeräte eine ganze Reihe von Werkzeugeinheiten zur Bearbeitung des Bodens auf. Diese Werkzeugeinheiten haben jeweils (wenigstens) einen Tragarm, der an dem Gerätechassis schwenkbar gelagert ist und über einen Kurbeltrieb um diese Schwenklagerung auf- und abschwenkbar ist. Am anderen Ende des Tragarmes ist dann ein Stechwerkzeug angelenkt.

Der Kurbeltrieb weist in der Regel eine Kurbelwelle mit wenigstens einem Kurbelzapfen auf, an dem eine Kurbelverbindungseinrichtung in Form einer starren Pleuelstange oder starren Kurbelstange - auch zuweilen Antriebsstange genannt- drehbar angelenkt ist. Am anderen Ende der Pleuel- oder Kurbelstange ist dann der Tragarm schwenkbar angelenkt.

Zum Anlenken der Werkzeuge gibt es in der Regel als Stechwerkzeuganlenkungseinrichtung einen Werkzeughalter, in welchen ein Stechwerkzeug wie zum Beispiel eine Zinke oder eine Zinkengruppe oder ein Hohlspoon oder nagelbrettartige Stechwerkzeugeinheiten fest befestigt werden können. Diese Werkzeughalter sind schwenkbar an den Tragarm angelenkt.

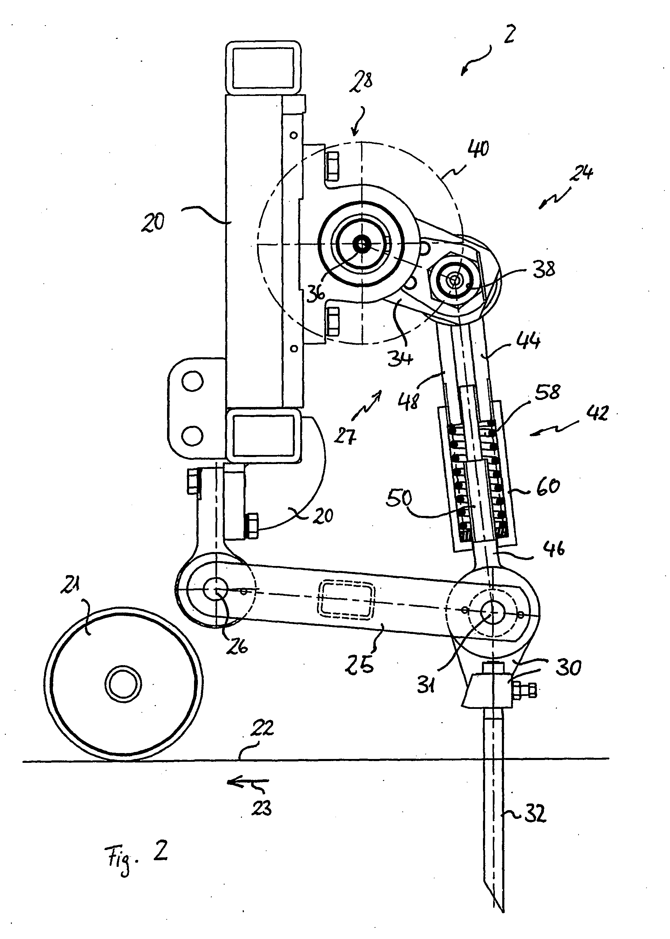

Wie sich aus den Fig. 2 und 3 der EP 0 853 869 B1 und der zugehörigen Beschreibung ergibt, treten gemäß einer hier besonders interessierenden Bauart von Tiefenlüftern beim Abwärtsbewegen der Tragarme die Stechwerkzeuge in den Boden ein. Bei Weiterfahren des Bearbeitungswerkzeuges in Fahrtrichtung bleiben die Stechwerkzeuge in der unteren Lage des Tragarmes zunächst im Boden stecken und werden durch den Widerstand relativ zu dem Tragarm verschwenkt. Der Werkzeughalter oder allgemeiner die Stechwerkzeuganlenkungseinrichtung verschwenkt sich dabei relativ zu dem Tragarm. Weiter gibt es in der Regel für jedes Stechwerkzeug bzw. für jeden Stechwerkzeughalter einen Anschlag, gegen welchen das Stechwerkzeug bzw. der Stechwerkzeughalter durch eine Vorspanneinrichtung vorgespannt ist. Bei der erläuterten Relativverschwenkung der Stechwerkzeuganlenkungseinrichtung relativ zu dem Tragarm im Verlaufe der Weiterbewegung bei eingestochenem Werkzeug verlässt der Werkzeughalter oder ein daran angelenktes Element den zugehörigen Anschlag. Wird der Tragarm dann wieder nach oben bewegt und das Stechwerkzeug durch diese nach oben Bewegung und die Weiterfahrt des Bodenbearbeitungsgerätes aus dem Boden herausgezogen, dann zieht die Vorspanneinrichtung die Stechwerkzeuganlenkungseinrichtung wieder gegen den Anschlag.

Solche Bodenbearbeitungsgeräte werden oft auf Sportrasenflächen eingesetzt, wo die Böden durch Spielbetrieb recht festgetreten werden können, man denke nur zum Beispiel an Fussballfelder oder die Abschlagstellen vielbespielter Golfplätze. Eine Tiefenauflockerung ist dann wichtig, um auch in einem solchen rauen Betrieb gesunden Rasen zu erhalten. Es ist einsichtig, dass wegen möglicher harter Bodenverhältnisse eine relativ starke Antriebskraft auf jedes Stechwerkzeug ausgeübt werden, damit es auch in festgetretene Böden eindringen kann. Daher sind die Kurbelwellen und die Kurbelstangen besonders kräftig, starr und massiv ausgeführt.

Nun kann es aber vorkommen, dass ein Stechwerkzeug bei Einstich in den Boden auf ein Hindernis, beispielsweise einen Stein oder eine Wurzel trifft. Ein solches Hindernis kann einen heftigen Schlag auf das gesamte Bodenbearbeitungsgerät geben. Diese Schläge werden über das Bodenbearbeitungsgerät auf das Zugfahrzeug übertragen und belasten das gesamte System. Daher konnte mit vielen bisher bekannten Bodenbearbeitungsgeräten nur eine relativ geringe Bearbeitungsgeschwindigkeit erzielt werden, bei höheren Geschwindigkeiten wurde die Belastungen aufgrund der Rückschläge bei Auftreffen auf Hindernisse, aber auch bereits aufgrund von Rückschlägen bei normaler Bearbeitung relativ harter Böden einfach zu groß.

Um diese Schläge zu dämpfen und/oder mögliche Schäden auf das Gerät zu vermeiden, sind daher bei Bodenbearbeitungsgeräten, wie sie aus der JP-A-55-89538 sowie der EP 1 208 730 A1 bekannt sind, spezielle Dämpfungsvorrichtungen vorgesehen.

Bei dem Bodenbearbeitungsgerät nach der JP 55-89538 sind zwei parallel geführte Tragarme vorgesehen, die beide entgegen einer Federvorspannung längenveränderlich sind. Auf diese Weise kann das Stechwerkzeug bei Auftreffen auf ein Hindernis durch Längenveränderung der Tragarme entgegen der Federspannung verschwenkt werden, wobei es dann an dem Hindernis vorbeigleiten soll. Diese Konstruktion ist einerseits besonders aufwändig, andererseits ist das Funktionieren des Ausweichens von der Art des Hindernisses, dem Auftreffwinkel sowie der Form des Hindernisses abhängig. Trifft das Stechwerkzeug zum Beispiel mit einem mehr oder weniger senkrechten Winkel auf eine flache Oberfläche eines Steines, wird kein Ausweichen erfolgen, sondern der Stoß voll über den Kurbeltrieb auf das Bodenbearbeitungsgerät und dann auch auf den Traktor übertragen. Aufgrund der beiden Tragarme muss außerdem eine große Masse auf und ab bewegt werden, was allein schon den Betrieb des bekannten Bodenbearbeitungsgeräts unruhig macht.

Bei dem Bodenbearbeitungsgerät nach der EP 1 208 730 A1 ist dagegen ein Dämpfungsglied an einem geräteseitigen Oberlenkeranschluss vorgesehen. Bei Schlägen durch Hindernisse, dreht sich aufgrund des Rückschlags das Bodenbearbeitungsgerät um seinen Unterlenkeranschluss, diese Bewegung wird aber in dem Dämpfungsglied aufgefangen und gedämpft und somit nicht auf das Zugfahrzeug übertragen. Diese Lösung hat sich als hervorragend für die Praxis herausgestellt, insbesondere konnten damit die Bearbeitungsgeschwindigkeiten wesentlich erhöht werden. Problematisch verbleibt die Gefahr von Beschädigungen des Antriebsstranges durch heftige Stöße. Dem wird durch entsprechend massive Ausführung des gesamten Antriebsstranges - Kurbeltrieb, Kurbelstange und Tragarm - entgegengetreten. Dies funktioniert zwar recht gut, jedoch müssen relativ hohe Massen hergestellt, handgehabt und bewegt werden.

Ausgehend vom Stand der Technik nach der EP 1 208 730 A1 ist es Aufgabe der Erfindung, ein Bodenbearbeitungsgerät der im Oberbegriff des beigefügten Anspruchs 1 genannten Art derart zu verbessern, dass durch Auftreffen der Stechwerkzeuge auf Hindernisse verursachte Gefahren von Beschädigungen und/oder sonstige nachteilige Folgen gering sind und dennoch kleinere bewegte Massen vorgesehen werden können.

Diese Aufgabe wird durch ein Bodenbearbeitungsgerät mit den Merkmalen des beigefügten Anspruchs 1 gelöst.

Vorteilhafte Ausgestaltungen der Erfindung sind Gegenstand der Unteransprüche.

Erfindungsgemäß ist demnach ein Bodenbearbeitungsgerät für die Tiefenlockerung von Böden vorgesehen, welches eine Reihe von Tragarmen aufweist, von denen jeder mit einem ersten Bereich - dies ist in der Regel ein erster Endbereich - an einem Geräterahmen oder einem Gerätechassis derart gelagert ist, dass er um eine erste Schwenkachse schwenkend auf und ab bewegbar ist. Weiter ist eine Kurbelwelle mit wenigstens einem Kurbelzapfen zum Antreiben dieser Auf- und Ab-Bewegung vorgesehen. An einem zweiten Bereich, insbesondere einem zweiten Endbereich, jedes Tragarmes ist jeweils wenigstens eine Stechwerkzeuganlenkungseinrichtung vorgesehen, an welcher ein Stechwerkzeug angelenkt werden kann. Eine solche Stechwerkzeuganlenkungseinrichtung kann z. B. durch die zuvor erläuterten Werkzeughalter gebildet sein. Pro Tragarm ist weiter wenigstens eine Kurbelverbindungseinrichtung vorgesehen, welche die Stechwerkzeuganlenkungseinrichtung mit dem wenigstens einen Kurbelzapfen der Kurbelwelle verbindet, so dass die Stechwerkzeugsanlenkungseinrichtung und damit auch ein darin gehaltenes Stechwerkzeug auf und ab bewegt werden kann. Bevorzugt greift die Kurbelverbindungseinrichtung einenends an dem Kurbelzapfen und anderenends an dem Tragarm an, um so die Stechwerkzeuganlenkungseinrichtung mittelbar über den Tragarm mit der Kurbelwelle zu verbinden. Es könnte aber auch eine direkte Verbindung der Stechwerkzeuganlenkungseinrichtung mit der Kurbelwelle vorgesehen sein.

Erfindungsgemäß ist weiter diese Kurbelverbindungseinrichtung mit einer Endkoppelungseinrichtung versehen, welche wenigstens bei Überlast eine Relativbewegung der Stechwerkzeuganlenkungseinrichtung auf den Kurbelzapfen zu zulässt. Während also im Stand der Technik der Kurbelzapfen durch eine starre Antriebsstange oder Pleuelstange mit dem Tragarm und damit mit der Stechwerkzeuganlenkungseinrichtung verbunden ist, ist bei der Erfindung die Möglichkeit einer Entkoppelung zwischen der Stechwerkzeuganlenkungseinrichtung und der Kurbelwelle zumindest für den Fall der Überlast vorgesehen. Trifft somit das Stechwerkzeug im Betrieb auf einen Stein oder dergleichen Hindernis, so wird es den Stoß zunächst auf die Stechwerkzeuganlenkungseinrichtung übertragen und gelangt von dort in die Entkoppelungseinrichtung. Entsteht hier eine Überlast, gibt die Entkoppelungseinrichtung nach, so dass der Stoß nicht in voller Härte auf die Kurbelwelle übertragen wird. Somit ist bereits die Kurbelwelle und damit auch der zuvor liegende Antriebsstrang vor Überlast geschützt, so dass er auch weniger aufwendig und starr konstruiert werden kann.

Die Entkoppelungseinrichtung kann ein elastisches Dämpfungsglied, welches ein elastisches Nachgeben ermöglicht und/oder ein inelastisches Dämpfungsglied, welches bei Überlast bricht und/oder sich bleibend verformt aufweisen. Bevorzugt ist ein elastisches Dämpfungsglied, wie beispielsweise eine Druckfeder oder dergleichen. Ein solches kann zunächst sehr harte Stöße abfedern und somit eine Überlast auf den Antriebsstrang vermeiden. Eine gewisse Dämpfung erfolgt jedoch auch bereits bei weniger heftigen Stößen, so dass die Kurbelwelle insgesamt im normalen Betrieb ruhiger läuft. Insofern kann man mit einer solchen Ausbildung auch schnellere Betriebsarten und eine höhere Frequenz von Stechbewegungen erreichen.

Ein bleibend verformbares oder brechendes Dämpfungsglied ist zur Vermeidung von Schäden bei zu großen Stößen vorgesehen und nur bei Überlast aktiv. Trifft das Stechwerkzeug auf ein Hindernis, so dass ein zu großer Stoß entsteht, bei der auf die Kurbelverbindungseinrichtung eine über einer Kraftschwelle liegende Kraft anliegt, so führt diese zum Bruch oder zur bleibenden Verformung des inelastischen Dämpfungsgliedes, welches daraufhin ausgetauscht werden muss. Allerdings kann man so sehr einfache Maßnahmen vorsehen, größere Schäden an dem Bodenbearbeitungsgerät zu vermeiden, wobei ein solches Dämpfungsglied leicht zugänglich und auch leicht austauschbar gestaltet werden kann.

Sozusagen eine Zwischenform zwischen einer voll elastischen Dämpfung und der voll inelastischen Dämpfung stellt eine weitere Ausführungsform der Erfindung dar, bei der die Entkoppelungseinrichtung eine bei Überlast sich lösende Rastverbindung aufweist. Tritt ein heftiger Stoß auf, löst sich die Rastverbindung, so dass der Stoß nicht auf die Kurbelwelle übertragen wird. Bei der nächsten Aufbewegung kann sich dann die Rastverbindung wieder selbsttätig einrasten; oder das erneute Wiederherstellen der Rastverbindung geschieht manuell durch die Bedienperson.

Bei einer bevorzugten konkreten Ausgestaltung ist vorgesehen, dass die Kurbelverbindungseinrichtung ein erstes Antriebsglied aufweist, das an den Kurbelzapfen drehbar angelenkt ist. Weiter weist die Kurbelverbindungseinrichtung ein zweites Antriebsglied auf, das an dem Tragarm schwenkbar angelenkt ist. Diese Antriebsglieder können z. B. stangenartig aufgebaut sein oder auch nur entsprechende Lager und einen Halter aufweisen. Weiter ist vorgesehen, dass die beiden Antriebsglieder durch die Entkoppelungseinrichtung aneinander gekoppelt sind. Dies erfolgt vorzugsweise derart, dass sie bis zum Erreichen einer Überlast mehr oder weniger starr verbunden sind. Die starre Verbindung kann z. B. durch eine Feder mit sehr steifer Federkonstante geschehen (elastisches Dämpfungsglied) oder durch ein bei Überlast brechendes Verbindungsglied, beispielsweise eine Stange aus Fieberglas mit Sollbruchstelle oder durch eine sich bleibend verformbares Dämpfungsglied, beispielsweise eine Konstruktion, wie sie in Lenkstöcken von Kraftfahrzeugen vorgesehen ist, z. B. mit einem aus Lochblech mit relativ großen Löchern geformtes Rohr, welches bei Überlast gestaucht werden kann, oder es ist eine Rastverbindung zwischen den Antriebsgliedern vorgesehen. Je nach Bedarf kann es auch eine Kombination dieser verschiedenen Dämpfungsglieder/Verbindungsglieder geben, wobei eine Parallelschaltung oder vorzugsweise eine Reihenschaltung denkbar wäre.

Die beiden Antriebsglieder können beispielsweise Teile einer teleskopartig längenveränderlichen Antriebsstange sein. Die Antriebsglieder könnten aber auch schwenkbar miteinander verbunden sein. Z. B. sind die beiden Antriebsglieder stangenartige Elemente oder Lagerelemente, welche an ihren aneinander angreifenden Enden schwenkbar miteinander verbunden sind und in einem stumpfen Winkel durch das Dämpfungs- oder Verbindungsglied festgelegt sind. Tritt dann eine Überlast auf, schwenken sich die beiden Antriebsglieder unter Verformung oder Bruch des Dämpfungsgliedes oder unter Lösen einer Rastverbindung zueinander. Der stumpfe Winkel gibt dann die Richtung der Verformung vor.

Ausführungsbeispiele der Erfindung werden nachfolgend anhand der beigefügten Zeichnung näher erläutert. Darin zeigen:

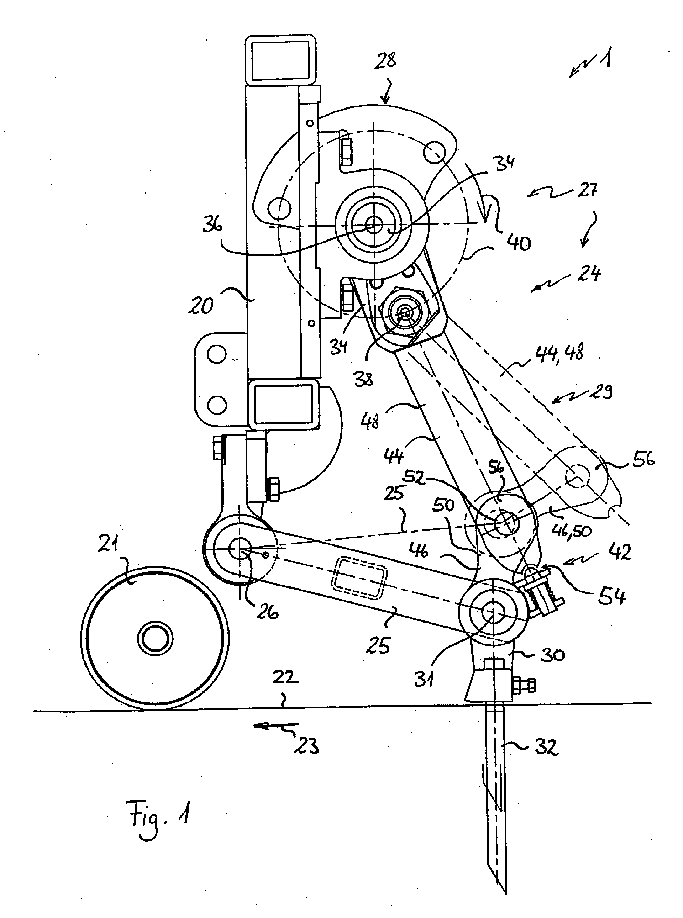

- Fig. 1 und 2: vergleichbare Seitenansichten der wesentlichsten Bauelemente von zwei Ausführungsformen von Bodenbearbeitungsgeräten zur Tiefenlockerung von Böden mit einem Teil eines Geräterahmens und mit Werkzeugeinheiten mit angetrieben auf und ab bewegbaren Tragarmen und daran angelenkten Stechwerkzeuganlenkungseinrichtungen.

Die Figuren zeigen jeweils Seitenansichten quer zur Fahrtrichtung gesehen auf wesentliche Bauteile von verschiedenen Ausführungsformen 1, 2 eines Bodenbearbeitungsgerätes für die Tiefenlockerung von Böden. Dabei sind weitere typische Bauteile solcher Geräte, die gut im Stand der Technik - siehe zum Beispiel die in der Beschreibungseinleitung erwähnten Druckschriften - bekannt sind, der besseren Übersichtlichkeit wegen weggelassen. In der Regel haben die hier in Rede stehenden Bodenbearbeitungsgeräte eine Mehrzahl von Werkzeugeinheiten, die quer zur Fahrtrichtung am Bodenbearbeitungsgerät verteilt angeordnet sind. Eine perspektivische Ansicht einer solchen Verteilung ist beispielsweise in der deutschen Patentanmeldung DE 10 2004 018 101 A1 wiedergegeben, auf die für weitere Einzelheiten der in Rede stehenden Bodenbearbeitungsgeräte ausdrücklich verwiesen wird.

Die Bodenbearbeitungsgeräte 1 und 2 weisen einen an ein Zugfahrzeug anschließbaren Geräterahmen 20 auf, der mittels einer Rolle 21 über den Boden 22 in Bewegungsrichtung 23 verfahrbar ist.

Es sind mehrere identisch ausgebildete Werkzeugeinheiten 24 in Richtung in die Darstellungsebene hinein nebeneinander vorgesehen, von denen in den Figuren jeweils nur eine dargestellt ist. Jede Werkzeugeinheit 24 hat einen Tragarm 25 - dies kann zum Beispiel eine Stange sein, bevorzugt ist jedoch jeder Tragarm 25 durch mehrere aneinander gekoppelte, zum Beispiel aneinander geschweißte parallele Stangen gebildet. Der Tragarm 25 ist an einem Ende um eine erste Schwenkachse 26 schwenkbar mittelbar oder unmittelbar an dem Geräterahmen 20 derart angelenkt, dass die erste Schwenkachse 26 orststabil zum Geräterahmen 20 ist. An dem Tragarm 25 greift eine Antriebseinrichtung 27 mit einem Kurbeltrieb 28 und einer Kurbelverbindungseinrichtung 29 an, die den Tragarm 25 um die erste Schwenkachse 26 auf und ab schwenkend antreibt. Am freien Ende des Tragarmes 25 ist eine Stechwerkzeuganlenkungseinrichtung in Form eines Werkzeughalters 30 relativ zu dem Tragarm 25 um eine zweite Schwenkachse 31 schwenkbar angelenkt. Demnach bewegt sich die zweite Schwenkachse 31 und der Werkzeughalter 30 mit dem Tragarm 25 auf und ab. An dem Werkzeughalter 30 ist ein Stechwerkzeug 32 zum Einstechen in dem Boden 22 fest, jedoch auswechselbar, befestigt.

Der Kurbeltrieb 28 weist eine Kurbelwelle 34 auf, die um eine Drehachse 36 drehbar an dem Geräterahmen 20 gelagert ist und jeweils pro Werkzeugeinheit 24 einen exzentrisch hierzu angeordneten Kurbelzapfen 38 hat. In den Zeichnungen ist die Drehbewegung des zu der dargestellten Werkzeugeinheit 24 gehörenden Kurbelzapfens 38 durch eine strichpunktierte Linie 40 angedeutet.

Die Kurbelverbindungseinrichtung 29 greift mit einem Ende an dem Kurbelzapfen 38 und mit dem anderen Ende an dem Tragarm 25 jeweils drehbar bzw. schwenkbar an. Die Anlenkung an dem Tragarm 25 erfolgt bei den dargestellten Ausführungsbeispielen konzentrisch zu der Anlenkung des Werkzeughalters, dies ist aber nicht zwingend so. Auf diese Weise wird der Werkzeughalter 30 an den Kurbeltrieb 28 derart angeschlossen, dass er auf und ab bewegbar ist. Um genügend Kraft auf den Werkzeughalter zum Einstechen des Stechwerkzeuges 32 aufbringen zu können, ist die Kurbelverbindungseinrichtung im Wesentlichen starr oder relativ steif verbunden. Jedoch weist die Kurbelverbindungseinrichtung 29 eine Entkoppelungseinrichtung 42 auf, die zumindest bei Überlast ein Nachgeben des Werkzeughaltes 30 entgegen einer Antriebsbewegung ermöglicht.

Hierzu ist die Kurbelverbindungseinrichtung 29 nicht, wie im Stand der Technik, als starre Antriebsstange ausgebildet, sondern weist ein erstes Antriebsglied 44, das drehbar an dem Kurbelzapfen 38 angeschlossen ist, und ein zweites Antriebsglied 46, welches schwenkbar an dem Werkzeughalter 30 oder dem Tragarm 25 angeschlossen ist, auf. Die Entkoppelungseinrichtung 42 verbindet die beiden Antriebsglieder 44, 46 derart miteinander, dass ein normaler Antrieb des Tragarms 25 bzw. des Werkzeugshalters 30 über den Kurbeltrieb 28 ermöglicht ist, zumindest bei Überlast jedoch eine Relativbewegung der beiden Antriebsglieder 44, 46 möglich ist.

Bei der in Fig. 1 dargestellten ersten Ausführungsform eines Bodenbearbeitungsgerätes 1 ist das erste Antriebsglied 44 in Form eines ersten Stangenelements 48 ausgebildet, und das zweite Antriebsglied 46 ist in Form eines zweiten Stangenelements 50 ausgebildet. Die beiden Stangenelemente 48, 50 sind an ihren einander zugewandten Enden mittels eines Stiftes 52 schwenkbar miteinander verbunden. In der mit durchgezogenen Linien in Fig. 1 dargestellten normalen Betriebsstellung bilden die beiden Stangenelemente 48, 50 einen stumpfen Winkel zueinander und sind in dieser Position durch eine Rastverbindung 54 arretiert.

Trifft bei dieser Ausführungsform das Stechwerkzeug 32 beim Einstich in den Boden 22 auf ein Hindernis, löst sich bei Überschreiten einer Kraft die Rastverbindung 54, so dass die beiden Stangenelemente 48, 50 zueinander abknicken können, wie dies durch strickpunktierte Linien in Fig. 1 dargestellt ist. Ein Wiedereinrasten kann dann bei angehobenen Stechwerkzeug unter Ausübung einer in Richtung "Durchdrücken" gerichteten Kraft auf die Verbindungsstelle 56 zwischen den beiden Stangenelementen 48, 50 erfolgen.

Bei der in Fig. 2 dargestellten zweiten Ausführungsform eines Bodenbearbeitungsgerätes 2 ist die Kurbelverbindungseinrichtung 29 als Teleskopstange ausgeführt, wobei die beiden Antriebsglieder 44, 46 die beiden Teleskopteile bilden. Die Entkoppelungseinrichtung 42 weist ein Dämpfungsglied in Form einer starken Druckfeder 58 auf, die in einer Hülse 60 vorgespannt aufgenommen ist.

Die Druckfeder 58 ist so steif, dass normale Antriebskräfte im Wesentlichen unverändert von dem Kurbelzapfen auf den Werkzeughalter30 übertragen werden. Trifft jedoch das Stechwerkzeug 32 auf ein hartes Hindernis, gibt die Druckfeder 58 entsprechend nach und dämpft so den Rückstoß.

Anstelle der Druckfeder 58 können in nicht dargestellten Ausführungsformen verschiedene andere Federformen eingesetzt sein, beispielsweise ein elastomerer Körper oder eine Torsionsfeder, welche bei einer ersten Ausführungsform nachgebildeten Konstruktion in der Verbindungsstelle 56 untergebracht ist.

In einer weiteren nicht dargestellten Ausführungsform sind die beiden Stangenelemente 48, 50 anstelle durch die Rastverbindung 54 durch einen Scherstift miteinander verbunden, welcher bei Überlast bricht und so ein Nachgeben in der gleichen Weise, wie anhand der Rastverbindung 54 erläutert, ermöglicht. Jedoch ist hier bei Wiederverbindung der beiden Stangenelemente 48, 50 der Scherstift durch einen neuen zu ersetzen.

### Bezugszeichenliste:

- 1: Bodenbearbeitungsgerät (erste Ausführungsform)
- 2: Bodenbearbeitungsgerät (zweite Ausführungsform)
- 20: Geräterahmen
- 21: Rolle
- 22: Boden
- 23: Bewegungsrichtung
- 24: Werkzeugeinheit
- 25: Tragarm
- 26: erste Schwenkachse
- 27: Antriebseinrichtung
- 28: Kurbeltrieb
- 29: Kurbelverbindungseinrichtung
- 30: Werkzeughalter (Stechwerkzeuganlenkungseinrichtung)
- 31: zweite Schwenkachse
- 32: Stechwerkzeug
- 34: Kurbelwelle
- 36: Drehachse
- 38: Kurbelzapfen
- 40: Drehbewegung
- 42: Entkoppelungseinrichtung
- 44: erstes Antriebsglied
- 46: zweites Antriebsglied
- 48: erstes Stangenelement
- 50: zweites Stangenelement
- 52: Stifte
- 54: Rastverbindung
- 56: Verbindungsstelle
- 58: Druckfeder (Dämpfungsglied)
- 60: Hülse

## Patentansprüche

1. Bodenbearbeitungsgerät (1, 2) für die Tiefenlockerung von Böden (22) mit:
einer Reihe von Tragarmen (25), von denen jeder mit einem ersten Bereich, insbesondere einem ersten Endbereich, an einem Geräterahmen (20) oder einem Gerätechassis um eine erste Schwenkachse (26) auf und ab schwenkbar gelagert ist,
einer Kurbelwelle (34) mit wenigstens einem Kurbelzapfen (38);
je wenigstens einer Stechwerkzeuganlenkungseinrichtung (30) zum Anlenken eines Stechwerkzeuges (32) an einem zweiten Bereich, insbesondere einem zweiten Endbereich, jedes Tragarmes (25), und
wenigstens einer Kurbelverbindungseinrichtung (29) pro Tragarm (25), welche die Stechwerkzeuganlenkungseinrichtung (30) zum Antreiben ihrer durch den Tragarm (25) geführten Auf- und Abbewegung mit dem wenigstens einen Kurbelzapfen (38) der Kurbelwelle (34) verbindet,
**dadurch gekennzeichnet,**
**dass** die Kurbelverbindungseinrichtung (29) eine Entkoppelungseinrichtung (42) aufweist, die wenigstens bei Überlast zwischen der Kurbelwelle (34) und der Stechwerkzeuganlenkungseinrichtung (30) eine Relativbewegung der Stechwerkzeuganlenkungseinrichtung (30) auf den Kurbelzapfen (38) zu zulässt.

2. Bodenbearbeitungsgerät (1, 2) nach Anspruch 1,
**dadurch gekennzeichnet,**
**dass** die Kurbelverbindungseinrichtung (29) ein erstes, an den Kurbelzapfen (38) drehbar angelenktes Antriebsglied (44) und ein zweites, an den Tragarm (25) schwenkbar angelenktes Antriebsglied (46) aufweist,
und **dass** das erste und das zweite Antriebsglied (44, 46) durch die Entkoppelungseinrichtung (42) derart aneinander gekoppelt sind, dass sie bis zum Erreichen einer Überlastkraft im wesentlichen starr oder steif verbunden sind, bei Überschreiten der Überlastkraft aber relativ beweglich sind.

3. Bodenbearbeitungsgerät nach Anspruch 2,
**dadurch gekennzeichnet,**
**dass** die beiden Antriebsglieder (44, 46) bei Überlast teleskopartig zueinander verschiebbar sind.

4. Bodenbearbeitungsgerät nach Anspruch 2,
**dadurch gekennzeichnet,**
**dass** die beiden Antriebsglieder (44, 46) aneinander derart angelenkt sind, dass sie bei Überlast zueinander verschwenkbar sind.

5. Bodenbearbeitungsgerät nach einem der voranstehenden Ansprüche,
**dadurch gekennzeichnet,**
**dass** die Entkopplungseinrichtung (42) ein Dämpfungsglied (58) aufweist, über das zumindest ein Teil der Antriebskraft von dem Kurbelzapfen (38) auf den (25) Tragarm übertragen wird.

6. Bodenbearbeitungsgerät nach Anspruch 5,
**dadurch gekennzeichnet,**
**dass** das Dämpfungsglied eine Feder (58), insbesondere Druckfeder, und/oder einen elastomeren Körper aufweist.

7. Bodenbearbeitungsgerät nach einem der voranstehenden Ansprüche,
**dadurch gekennzeichnet,**
**dass** die Entkopplungseinrichtung (42) ein bei Überlast brechendes oder sich bleibend verformbares Verbindungsglied aufweist, über das zumindest ein Teil der Antriebskraft von dem Kurbelzapfen (38) auf den Tragarm (25) übertragen wird.

8. Bodenbearbeitungsgerät nach einem der voranstehenden Ansprüche,
**dadurch gekennzeichnet,**
**dass** die Entkoppelungseinrichtung (42) eine sich bei Überlast lösende Rastverbindung (54) aufweist, über die zumindest ein Teil der Antriebskraft von dem Kurbelzapfen (38) auf den Tragarm (25) übertragen wird.

9. Bodenbearbeitungsgerät nach einem der voranstehenden Ansprüche,
**dadurch gekennzeichnet,**
**dass** die Stechwerkzeuganlenkungseinrichtung (30) an dem Tragarm relativ zu dem Tragarm um eine zweite Schwenkachse (31) schwenkbar derart angelenkt ist, dass ein an der Stechwerkzeuganlenkungseinrichtung (30) befestigtes Stechwerkzeug (32) bei Abwärtsbewegung des zugeordneten Tragarmes (25) in den Boden (22) einstechbar ist und dass die Stechwerkzeuganlenkungseinrichtung zumindest bei eingestochenem Stechwerkzeug (32) und Weiterbewegung des Bodenbearbeitungsgeräts (1, 2) in Bewegungsrichtung relativ zu dem Tragarm (25) verschwenkt wird.

## Claims

1. Soil-working implement (1, 2) for the deep loosening of soils (22), having:
a row of support arms (25), each of which is mounted with a first region, particularly a first end region, on an implement frame (20) or an implement chassis, so as to be pivotable up and down about a first pivot axis (26),
a crankshaft (34) with at least one crankpin (38);
in each case at least one piercing tool jointing device (30) for jointing a piercing tool (32) to a second region, particularly a second end region, of each support arm (25), and
at least one crank connecting device (29) for each support arm (25), which connects the piercing tool jointing device (30) to the at least one crankpin (38) of the crankshaft (34) for driving the up and down movement thereof guided by the support arm (25),
**characterised in that**
the crank connecting device (29) comprises an uncoupling device (42) which allows relative movement of the piercing tool jointing device (30) towards the crankpin (38) at least in the event of an overload between the crankshaft (34) and the piercing tool jointing device (30).

2. Soil-working implement (1, 2) according to claim 1, **characterised in that**
the crank connecting device (29) comprises a first drive member (44) rotatably jointed to the crankpin (38) and a second drive member (46) pivotably jointed to the support arm (25),
and **in that** the first and second drive member (44, 46) are coupled to one another by the uncoupling device (42) such that, until an overload force is reached, they are substantially rigidly or stiffly connected, but when the overload force is exceeded they are relatively movable.

3. Soil-working implement according to claim 2, **characterised in that**
the two drive members (44, 46) are telescopically movable relative to one another in the event of an overload.

4. Soil-working implement according to claim 2, **characterised in that**
the two drive members (44, 46) are jointed to one another such that in the event of an overload they can pivot relative to one another.

5. Soil-working implement according to one of the preceding claims, **characterised in that**
the uncoupling device (42) comprises a damping member (58) through which at least part of the drive force from the crankpin (38) is transmitted to the support arm (25).

6. Soil-working implement according to claim 5, **characterised in that**
the damping member comprises a spring (58), particularly a compression spring, and/or an elastomeric body.

7. Soil-working implement according to one of the preceding claims, **characterised in that**
the uncoupling device (42) comprises a connecting member that breaks or is permanently deformed in the event of overload, through which at least some of the drive force is transmitted from the crankpin (38) to the support arm (25).

8. Soil-working implement according to one of the preceding claims, **characterised in that**
the uncoupling device (42) comprises a latch connection (54) that is released in the event of overload, through which at least some of the drive force is transmitted from the crankpin (38) to the support arm (25).

9. Soil-working implement according to one of the preceding claims, **characterised in that**
the piercing tool jointing device (30) is jointed to the support arm so as to be pivotable relative to the support arm about a second pivot axis (31), such that a piercing tool (32) attached to the piercing tool jointing device (30) can be driven into the soil as the associated support arm (25) moves downwards, and **in that** the piercing tool jointing device is pivoted relative to the support arm (25) at least when the piercing tool (32) has been driven in and the soil-working implement (1, 2) is advanced in the direction of movement.

## Revendications

1. Appareil pour le travail des sols (1, 2), pour l'ameublissement en profondeur de sols (22) comprenant :
- une rangée de bras de support (25) dont chacun est relié par une première zone, notamment une première zone d'extrémité à un cadre d'outil (20) ou un châssis d'outil autour d'un premier axe de pivotement (26) pour pivoter en montant et en descendant,
- un arbre-manivelle (34) ayant au moins un tourillon (38),
- chaque fois au moins une articulation de broche (30) pour articuler une broche (32) à une seconde zone, notamment une seconde zone d'extrémité de chaque bras de support (25), et
- au moins une transmission de manivelle (29) par bras de support (25) qui relie l'articulation de broche (30) pour l'entraîner par le bras de support (25) de façon guidée selon un mouvement montant et descendant, en étant relié à au moins un tourillon (38) de l'arbre-manivelle (34),
appareil **caractérisé en ce que**
- la transmission de manivelle (29) comporte une installation de découplage (42) qui permet, en cas de surcharge entre l'arbre-manivelle (34) et l'articulation de broche (30), que cette articulation de broche (30) effectue un mouvement relatif par rapport au tourillon (38).

2. Appareil pour le travail du sol (1, 2) selon la revendication 1,
**caractérisé en ce que**
- la transmission de manivelle (29) comporte un premier organe d'entraînement (44) articulé en rotation au tourillon (38) et un second organe d'entraînement (46) articulé de manière pivotante au bras de support (25), et
- le premier et le second organe d'entraînement (44, 46) sont couplés l'un à l'autre par l'installation de découplage (42) de façon à être reliés rigidement ou pratiquement rigidement jusqu'à atteindre une force de surcharge et d'être mobiles de manière relative en cas de dépassement de la force de surcharge.

3. Appareil pour le travail du sol selon la revendication 2,
**caractérisé en ce que**
les deux organes d'entraînement (44, 46) coulissent télescopiquement l'un dans l'autre en cas de surcharge.

4. Appareil pour le travail du sol selon la revendication 2,
**caractérisé en ce que**
les deux organes d'entraînement (44, 46) sont articulés l'un à l'autre et pivotent l'un par rapport à l'autre en cas de surcharge.

5. Appareil pour le travail du sol selon l'une des revendications précédentes,
**caractérisé en ce que**
l'installation de découplage (42) comporte un organe d'amortissement (58) qui transmet au moins une partie de la force d'entraînement du tourillon (38) au bras de support (25).

6. Appareil pour le travail du sol selon la revendication 5,
**caractérisé en ce que**
l'organe d'amortissement comporte un ressort (58) notamment un ressort de compression et/ou un organe en élastomère.

7. Appareil pour le travail du sol selon l'une des revendications précédentes,
**caractérisé en ce que**
l'installation de découplage (42) comporte un organe de liaison qui se rompt ou qui se déforme de manière permanente en cas de surcharge, et une partie de la force d'entraînement exercée par le tourillon (38) sur le bras de support (25) est transmise par cet organe de liaison.

8. Appareil pour le travail du sol selon l'une des revendications précédentes,
**caractérisé en ce que**
l'installation de découplage (42) comporte une liaison enclipée (54) qui s'ouvre en cas de surcharge et par laquelle au moins une partie de la force d'entraînement est transmise par le tourillon (38) au bras de support (25).

9. Appareil pour le travail du sol selon l'une des revendications précédentes,
**caractérisé en ce que**
l'articulation de broche (30) est articulée de manière pivotante au bras de support autour d'un second axe de pivotement (31) de façon qu'une broche (32) fixée à l'articulation de broche (30) s'enfonce dans le sol (22) lorsque le bras de support (25) effectue un mouvement descendant et que l'articulation de broche bascule la broche (32) enfoncée dans la direction de mouvement par rapport au bras de support (25) pendant que l'appareil (1, 2) poursuit son déplacement.
